# FASCICULE DE BREVET EUROPEEN

(11) **EP 2 950 999 B1**
(45) Date de publication et mention de la délivrance du brevet: **07.03.2018**
(21) Numéro de dépôt: 14701800.6
(22) Date de dépôt: 31.01.2014
(51) Int. Cl.: B29C 47/00, B29C 43/24, B29C 47/92, B29D 30/60, B29C 47/32

(54) **APPAREIL ET PROCEDE POUR EXTRUDER UN MELANGE D'ELASTOMERE**
VORRICHTUNG UND VERFAHREN ZUM EXTRUDIEREN EINER ELASTOMERMISCHUNG
APPARATUS AND METHOD FOR EXTRUDING AN ELASTOMER MIXTURE

(30) Priorité: 01.02.2013 FR 1350890
(43) Date de publication de la demande: 09.12.2015
(73) Titulaire: Compagnie Générale des Etablissements Michelin, 63000 Clermont-Ferrand (FR)
(72) Inventeur: MONNEREAU, Patrice, 63040 Clermont-Ferrand Cedex 9 (FR); VERJAT, Jean-François, 63040 Clermont-Ferrand Cedex 9 (FR)
(74) Mandataire: Noel, Luminita
(86) Numéro de dépôt international: PCT/EP2014/051958
(87) Numéro de publication internationale: WO 2014/118340

(56) Documents cités:
- EP-A1- 1 552 914
- FR-A- 945 134
- FR-A1- 2 282 993
- US-A- 4 428 896
- US-A- 5 904 418
- US-A1- 2009 057 934

## Description

L'invention concerne le domaine de l'extrusion des mélanges d'élastomères plus particulièrement destinés à la fabrication des pneumatiques.

De manière connue, la fabrication des profilés formant les pneumatiques fait appel à des appareils d'extrusion qui ont pour fonction de produire des bandes de caoutchouc selon un profil déterminé. Ces dispositifs sont formés d'un corps et d'une vis montée à rotation dans ledit corps.

La forme du corps et de la vis et leur agencement sont réalisés de sorte que la mise en rotation de la vis a pour effet de fournir un travail mécanique au mélange dans le but d'en accroître la fluidité, d'une part, et de propulser ledit mélange vers une filière d'extrusion dans le but de conférer un profil déterminé au produit extrudé, d'autre part. La filière d'extrusion est généralement formée entre une lame profilée fixe et un rouleau rotatif ou entre deux rouleaux rotatifs tournant dans des sens contraires.

La bande continue sortant de l'appareil d'extrusion peut être enroulée sur des moyens de stockage en vue d'une utilisation ultérieure ou elle peut alimenter directement un dispositif d'assemblage situé en aval.

Pour obtenir un profilé ayant des dimensions constantes, les appareils d'extrusion comprennent des moyens de régulation permettant d'agir sur différents paramètres, tels que la vitesse du rouleau et la pression dans la voûte de sortie en amont de la filière, sur la vitesse de rotation de la vis, sur la température du mélange d'élastomère, en fonction des mesures effectuées sur le profilé en aval de l'appareil d'extrusion.

Le document FR 1563077 décrit un procédé et une extrudeuse pour fabriquer des bandes en matière thermoplastique d'épaisseur régulière. L'extrudeuse comprend un corps à l'intérieur duquel tourne une vis d'extrusion qui pousse la matière depuis une entrée d'alimentation vers une filière d'extrusion qui débite dans une paire de cylindres rotatifs tournant en sens opposés, l'un des cylindres étant motorisé. Un manomètre placé dans la fente entre les cylindres ou en amont de celle-ci mesure la pression d'extrusion et transmet sa valeur à un circuit de réglage qui ajuste la vitesse de rotation du cylindre motorisé en conséquence. Le cylindre motorisé peut ainsi être ralenti ou accéléré de manière à garder la pression d'extrusion constante afin d'obtenir une bande extrudée d'épaisseur régulière. Toutefois, en mesurant les dimensions de la section transversale de la bande extrudée, il a été constaté que les fluctuations de la pression d'extrusion font varier non seulement l'épaisseur, mais également la largeur de la bande extrudée et ceci dans des proportions différentes de celle de l'épaisseur. De ce fait, l'ajustement de la vitesse du rouleau motorisé pour obtenir une épaisseur correcte ne suffit pas pour obtenir une bande extrudée ayant une largeur suffisamment précise.

Le document FR 2282993 décrit un procédé et un dispositif pour extruder un ruban d'élastomère à l'aide d'une extrudeuse à vis comportant en sortie d'une buse de filière deux rouleaux entraînés en rotation à une même vitesse, mais dans des sens contraires, l'épaisseur du ruban étant déterminée par la distance entre les rouleaux. En gardant la distance entre les rouleaux fixe, la variation de pression influe sur la largeur du ruban. Par conséquent, le dispositif propose des moyens de commande pour maintenir la largeur à une valeur prescrite. Ainsi, la largeur du ruban sortant de l'extrudeuse est mesurée avec un capteur électro-optique et comparée à une valeur de référence prédéterminée. Les écarts par rapport à la valeur de référence de la largeur du ruban sont utilisés pour commander la vitesse des rouleaux. Ceci permet de de faire varier la pression en fonction du débit de l'extrudeuse et d'obtenir un ruban de largeur constante. Toutefois, en mesurant l'épaisseur du ruban obtenu, il a été observé que, pour certaines valeurs de la pression dans la voûte de l'extrudeuse, avant la buse de filière, et lorsque la vitesse des rouleaux augmente afin de garder une largeur de ruban constante, l'épaisseur du ruban diminue.

Par ailleurs, le dispositif selon ce document présente comme inconvénient le fait de ne pas pouvoir modifier aisément l'épaisseur du ruban. En effet, pour procéder à une telle modification, il faut arrêter le dispositif et procéder à des réglages mécaniques pour approcher ou écarter les rouleaux. De telles manipulations imposent des contraintes de temps, de coût de main d'oeuvre et ont pour conséquence une baisse de productivité.

On connaît par ailleurs le document EP 1 552 914 une machine de malaxage d'un mélange de caoutchouc à l'aide de deux extrudeuses dont la sortie débouche dans l'entrefer de deux rouleaux, chaque rouleau étant muni de moyens d'entrainement en rotation. Les rouleaux peuvent être entraînés en rotation à des vitesses différentes pour orienter la bande de caoutchouc sur l'un des rouleaux ou pour fournir un travail de cisaillement plus important au mélange de caoutchouc. Ce document présente le même inconvénient que le précédent lorsqu'il fait appel à des moyens de réglage de la distance entre les rouleaux pour modifier l'épaisseur de la bande de caoutchouc obtenue.

Le but de la présente invention est de remédier aux inconvénients précités et de proposer un appareil et un procédé pour extruder un mélange d'élastomère permettant d'obtenir une bande de profilé extrudé en continu dont la section transversale présente des dimensions précises et constantes dans le temps, à des vitesses de profilage variables.

Cet objectif est atteint avec un appareil d'extrusion destiné à la fabrication d'une bande continue de produit profilé comprenant une vis animée en rotation dans un corps fixe comportant une entrée d'alimentation en mélange d'élastomère et une sortie munie d'une buse d'extrusion qui débite dans l'entrefer formé entre un premier rouleau et un deuxième rouleau qui sont rotatifs et sont amenés à tourner dans des sens contraires, l'appareil comportant des premiers moyens d'entraînement en rotation du premier rouleau et des premiers moyens de commande aptes à synchroniser la vitesse de rotation du premier rouleau et la vitesse de rotation de la vis, et des deuxièmes moyens d'entraînement en rotation du deuxième rouleau aptes à l'entraîner à une vitesse de rotation différente de la vitesse de rotation du premier rouleau, caractérisé en ce que lesdits premiers moyens de commande sont connectés aux moyens d'entraînement de la vis pour régler la vitesse de rotation de la vis en fonction de la largeur de la bande de produit profilé et en ce qu'il comprend des deuxièmes moyens de commande connectés auxdits deuxièmes moyens d'entraînement en rotation pour régler la vitesse de rotation du deuxième rouleau en fonction de l'épaisseur de ladite bande.

L'appareil d'extrusion de l'invention comporte une vis entraînée en rotation pour débiter un mélange d'élastomère dans l'entrefer formé entre deux rouleaux rotatifs, il est adapté à une production de bande de produit profilé en continu et à allure variable, l'un des rouleaux étant utilisé comme galet d'applique sur un dispositif aval. Pour ceci, un premier rouleau est entraîné en rotation pour déposer la bande de produit profilé extrudé sur un dispositif aval, la vitesse de rotation de ce rouleau correspondant à la vitesse de sortie du produit. L'appareil comprend par ailleurs des premiers moyens de commande qui sont aptes à synchroniser la vitesse de rotation du premier rouleau et la vitesse de rotation de la vis. Autrement dit, ces moyens de commande ajustent la vitesse de rotation de la vis en fonction de la vitesse de rotation du premier rouleau afin de ne pas altérer la géométrie du produit extrudé lors des variations du débit massique de l'appareil. Ces variations de débit sont dues soit aux variations de débit massique du dispositif aval, lorsque l'appareil d'extrusion est relié directement à un dispositif aval, soit aux variations de pression à l'intérieur du corps de l'appareil, avant la sortie du produit extrudé qui sont, elles, dues au type de mélange, à la viscosité de celui-ci ou aux conditions de température à l'intérieur du corps de l'appareil. Une telle synchronisation de la vitesse de la vis et de la vitesse du premier rouleau est faite par les premiers moyens de commande en fonction des valeurs mesurées d'une dimension de la section du produit extrudé ou en fonction des valeurs mesurées de la pression à l'intérieur du corps de l'appareil, avant la buse d'extrusion. Ainsi, en assurant la synchronisation des vitesses de la vis et de celle du premier rouleau, lesdits premiers moyens de commande assurent le contrôle d'une dimension de la section du produit extrudé, par exemple le contrôle la largeur de la bande de produit profilé.

Plus particulièrement selon l'invention, l'appareil d'extrusion comprend des deuxièmes moyens d'entraînement en rotation du deuxième rouleau lui permettant de tourner à une vitesse de rotation qui est différente de celle du premier rouleau. Autrement dit, chaque rouleau comporte ses propres moyens d'entraînement en rotation ce qui permet aux rouleaux de tourner indépendamment l'un de l'autre. Le deuxième rouleau peut ainsi être entraîné à l'aide des deuxièmes moyens d'entrainement à une vitesse qui est établie par des moyens de contrôle en fonction des paramètres mesurés de l'appareil d'extrusion ou du produit extrudé qui sont différents de ceux pour lesquels la vitesse de la vis a été synchronisée avec celle du premier rouleau.

Avantageusement, la vitesse de rotation du deuxième rouleau est variable indépendamment de la vitesse de rotation du premier rouleau.

Il est ainsi possible, en gardant constante la vitesse du premier rouleau qui applique la bande de produit profilé sur le dispositif aval, de varier la vitesse du deuxième rouleau et donc le débit de mélange d'élastomère dans l'entrefer des deux rouleaux.

En effet, en effectuant des tests en laboratoire, il a été constaté que la géométrie de la bande de produit profilé sortant de l'entrefer des deux rouleaux dépend de la vitesse des rouleaux et de la pression du mélange en amont des rouleaux. De surcroît, des mesures de la section transversale de la bande de produit profilé effectuées ont permis de constater de manière surprenante que, pour une largeur constante de la bande de produit profilé extrudé (ou pour des valeurs constantes de la pression du mélange en amont des rouleaux), lorsqu'il y a un différentiel de vitesse entre ces deux rouleaux, l'épaisseur de la bande de produit profilé a tendance à augmenter. Ceci s'explique par le fait que le produit sortant de l'extrudeuse adhère à l'un des rouleaux, notamment au premier rouleau qui sert de galet d'applique ou, pour certains mélanges d'élastomère, au rouleau le plus froid (qui est maintenu à une température inférieure à celle de l'autre par des moyens spécialement prévus dans ce but), et que l'autre rouleau fournit alors un débit plus important de matière en étant entraîné à une vitesse supérieure au premier. Ainsi, lorsque le débit du deuxième rouleau augmente, la bande de produit profilé n'étant pas entraînée plus vite, car elle est embarrée sur le premier rouleau qui tourne moins vite que le deuxième, on obtient une augmentation de l'épaisseur de la bande de produit profilé extrudé.

On pourrait, certes, à l'inverse, maintenir l'épaisseur constante (en assurant un différentiel de vitesses fixe entre les rouleaux qui forment la filière), et faire varier la largeur de la bande de produit profilé en agissant sur la pression dans la voûte en amont des rouleaux. Ceci est obtenu en faisant varier la vitesse de la vis par rapport aux vitesses des rouleaux qui restent constantes, tout en ayant des valeurs différentes l'une par rapport à l'autre.

Ainsi, par le biais de la différence entre les vitesses de rotation des deux rouleaux, différence obtenue par l'entraînement en rotation des deux rouleaux indépendamment l'un de l'autre, on arrive à contrôler l'une des dimensions de la section transversale de la bande de produit profilé, l'autre dimension étant contrôlée par les premiers moyens de commande qui assurent la synchronisation de la vitesse du premier rouleau d'applique et de celle de la vis d'extrusion. On arrive ainsi à contrôler les deux dimensions de la section transversale de la bande de produit extrudé de manière aisée et en continu lors du fonctionnement de l'appareil.

Avantageusement, lesdits deuxièmes moyens de commande comprennent un capteur de mesure de l'épaisseur de la bande de produit profilé et des moyens de comparaison de la valeur mesurée de l'épaisseur à une valeur de consigne de l'épaisseur et la vitesse de rotation du deuxième rouleau est commandée en fonction du résultat de la comparaison. Ainsi, en mesurant l'épaisseur de la bande immédiatement en sortie de l'entrefer des rouleaux et en la comparant à une valeur de consigne, on arrive à régler rapidement la vitesse du deuxième rouleau.

De préférence, la vitesse de rotation du deuxième rouleau est directement reliée à la vitesse de rotation du premier rouleau par un coefficient de proportionnalité. Il a été établi, lors des tests effectués en laboratoire, que l'on peut déterminer par voie expérimentale un coefficient de proportionnalité qui, pour un mélange d'élastomère prédéterminé et un appareil donné, relie les vitesses des deux rouleaux en fonction de l'épaisseur de la bande de produit profilé.

Avantageusement, l'appareil d'extrusion de l'invention comprend un capteur de mesure de la largeur de la bande de produit profilé et des moyens de comparaison de la valeur mesurée de la largeur à une valeur de consigne de la largeur et la vitesse de rotation de la vis est commandée en fonction du résultat de la comparaison.

Un tel capteur de mesure permet de détecter directement la variation de la largeur et la transmettre aux moyens de comparaison qui ajustent rapidement la vitesse de la vis en conséquence. Dans une variante, un capteur de pression placé dans le corps de l'extrudeuse en amont des rouleaux pourrait être utilisé pour ajuster la vitesse de la vis de manière à ce que la valeur mesurée de la pression soit égale à une valeur de consigne de celle-ci.

De préférence, la vitesse de rotation de la vis est directement liée à la vitesse de rotation du premier rouleau par un coefficient de proportionnalité. La valeur de consigne de ce coefficient de proportionnalité est déterminée par voie expérimentale pour un mélange d'élastomère donné et un appareil d'extrusion donné de manière à obtenir une bande de produit profilé extrudé d'épaisseur constante.

La largeur de la bande est contrôlée par la synchronisation de la vitesse de la vis et de celle du premier rouleau et l'épaisseur de la bande est contrôlée en ajustant de manière adéquate la vitesse du deuxième rouleau par rapport à celle du premier rouleau. Ainsi, par la commande adéquate des vitesses de rotation des composants de l'appareil, on arrive à régler de manière indépendante la largeur et l'épaisseur de la section transversale de la bande de produit profilé, et à obtenir ainsi des bandes de produit profilé de sections différentes avec une même configuration mécanique de l'appareil.

L'objet de l'invention est également atteint avec un procédé d'extrusion destiné à la fabrication d'une bande continue de produit profilé à l'aide d'un appareil d'extrusion comprenant une vis animée en rotation dans un corps fixe comportant une entrée d'alimentation en mélange d'élastomère et une sortie munie d'une buse d'extrusion qui débite dans l'entrefer formé entre un premier rouleau et un deuxième rouleau qui sont rotatifs et sont amenés à tourner dans des sens contraires, l'appareil comportant des premiers moyens d'entraînement en rotation du premier rouleau et des premiers moyens de commande, lesdits premiers moyens de commande étant aptes à synchroniser la vitesse de rotation du premier rouleau avec la vitesse de rotation de la vis, et des deuxièmes moyens d'entraînement en rotation du deuxième rouleau reliés à des deuxièmes moyens de commande, dans lequel on entraîne le deuxième rouleau en rotation à une vitesse de rotation différente de la vitesse de rotation du premier rouleau, et dans lequel on règle la vitesse de rotation de la vis en fonction de la largeur de la bande de produit profilé et on règle la vitesse de rotation du deuxième rouleau en fonction de l'épaisseur de ladite bande.

L'entraînement en rotation du deuxième rouleau à l'aide des deuxièmes moyens d'entraînement se fait en fonction de l'une des dimensions de la section transversale de la bande de produit profilé extrudé. On arrive ainsi à contrôler les deux dimensions de la section transversale de la bande de produit extrudé de manière aisée et en continu lors du fonctionnement de l'appareil.

Avantageusement, lesdits premiers moyens de commande sont connectés aux moyens d'entraînement de la vis pour régler la vitesse de rotation de la vis en fonction de la largeur de la bande de produit profilé et l'appareil comprend des deuxièmes moyens de commande connectés auxdits deuxièmes moyens d'entraînement en rotation pour régler la vitesse de rotation du deuxième rouleau en fonction de l'épaisseur de ladite bande.

De préférence, lesdits deuxièmes moyens de commande comprennent un capteur de mesure de l'épaisseur de la bande de produit profilé et des moyens de comparaison de la valeur mesurée de l'épaisseur à une valeur de consigne de l'épaisseur et que la vitesse de rotation du deuxième rouleau est commandée en fonction du résultat de la comparaison.

Avantageusement, ledit appareil comprend un capteur de mesure de la largeur de la bande de produit profilé et des moyens de comparaison de la valeur mesurée de la largeur à une valeur de consigne de la largeur et la vitesse de rotation de la vis est commandée en fonction du résultat de la comparaison.

De préférence, ledit premier rouleau est mis en appui sur la surface de réception d'un moyen de pose de bande de produit profilé pour servir de rouleau d'application de celle-ci. Lorsque ledit moyen de pose est un tambour d'assemblage, la vitesse circonférentielle du premier rouleau est égale à la vitesse circonférentielle de la surface de réception du tambour d'assemblage. Ceci permet une pose directe sur la surface de réception, avec un gain de temps de fabrication, notamment lors de la pose d'une bandelette de gomme par trancanage sur un tambour d'assemblage.

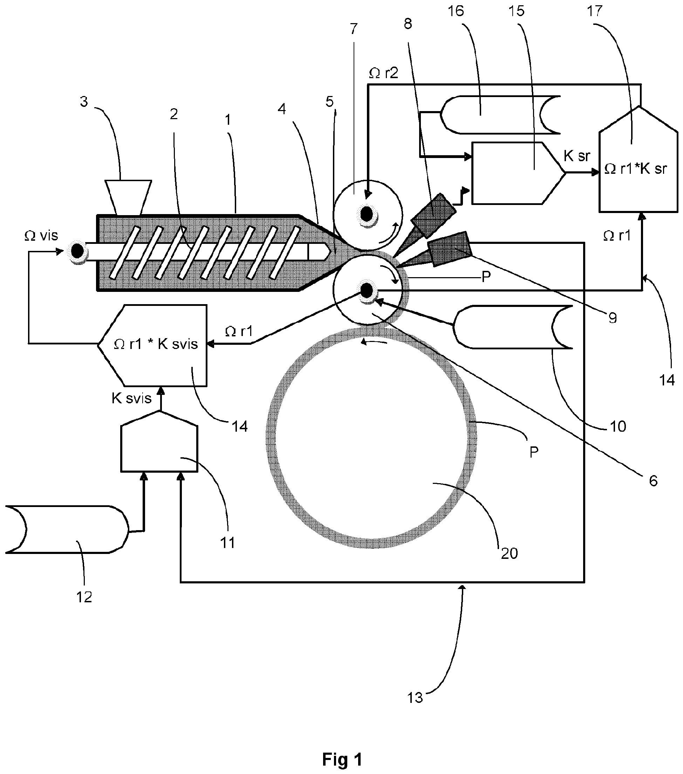

La description qui suit s'appuie sur la figure 1 qui représente de manière schématique un appareil d'extrusion de l'invention.

L'appareil d'extrusion représenté sur la figure 1 comprend une vis 2 animée en rotation par des moyens d'entraînement de la vis (non visibles sur le dessin), tels un moteur électrique, pour tourner à l'intérieur d'un corps 1. Le corps 1 a une forme générale cylindrique et comporte une entrée 3 d'alimentation d'un mélange d'élastomère et une sortie 4 munie d'une buse d'extrusion 5 qui conduit le mélange d'élastomère poussé par la vis 2 dans l'entrefer qui existe entre un premier rouleau 6 et un deuxième rouleau 7. Le premier rouleau 6 et le deuxième rouleau 7 sont entraînés en rotation en sens contraires. Ils forment un système de filière à rouleaux ayant pour rôle de profiler sous forme de bande le mélange d'élastomère sortant du corps 1 par la buse d'extrusion 5.

Dans l'exemple représenté à la figure 1, le premier rouleau 6 coopère directement avec un tambour d'assemblage 20 rotatif et de ce fait il sert de rouleau d'application de la bande de produit profilé P sur la surface de réception du tambour. La vitesse du premier rouleau 6 correspond sensiblement à la vitesse de sortie du produit et elle est adaptée à la vitesse de pose du produit profilé P sur le tambour d'assemblage 20. Le premier rouleau 6 est entraîné en rotation par un premier moteur d'entraînement à une vitesse de rotation Ωr1 qui correspond à une vitesse de pose donnée. Le premier moteur d'entraînement est commandé par un programmateur 10 dans la mémoire duquel sont stockées les valeurs de consigne de la vitesse de pose du produit profilé P sur le tambour d'assemblage 20. La vitesse circonférentielle du premier rouleau 6 est égale à la vitesse circonférentielle du tambour d'assemblage 20, le sens de rotation étant indiqué par des flèches sur la figure 1.

L'appareil d'extrusion de l'invention comprend par ailleurs des moyens de synchronisation de la vitesse du premier rouleau 6 et de celle de la vis 2. En vue de ceci, le premier rouleau 6 et la vis 2 sont munis chacun d'un moyen d'entraînement en rotation, par exemple un moteur électrique, et d'un codeur optique, et leurs vitesses sont synchronisées moyennant une commande d'axe. Ainsi, un moyen de mesure détermine à chaque instant la vitesse de rotation Ωr1 du premier rouleau 6 et transmet cette valeur à la commande de pilotage 14 de la vitesse de la vis Ωvis de sorte que, à tout instant, la vitesse de rotation de la vis Ωvis soit égale au produit de la vitesse de rotation du rouleau Ωr1 par un coefficient de proportionnalité Ksvis prédéterminé (Ω vis = K svis * Ω r1). Ce coefficient de proportionnalité Ksvis a été déterminé par voie expérimentale pour un mélange d'élastomère prédéterminé et un appareil d'extrusion donné de manière à adapter la vitesse de la vis 2 à celle du premier rouleau 6 pour obtenir un profilé P de largeur constante.

Les valeurs du coefficient de proportionnalité Ksvis sont constantes dans les conditions normales de fonctionnement, mais elles peuvent varier, notamment en fonction du débit d'alimentation de la vis, ou des variations de pression dans la voûte en amont de la buse d'extrusion 5 ou de la viscosité du mélange. Cette variation des valeurs du coefficient de proportionnalité Ksvis peut être appréciée en phase d'apprentissage et de détermination expérimentale du coefficient de proportionnalité.

Pour corriger ces erreurs de linéarité, il est possible d'introduire une boucle de correction 13 de la vitesse de la vis en mesurant la largeur « l » du profilé P directement en sortie de la filière à rouleaux de façon à modifier la valeur de consigne du coefficient de proportionnalité en fonction de la valeur de consigne « l consigne » de la largeur. Pour ceci, l'appareil d'extrusion comprend des moyens de mesure de la largeur l du profilé P, tel un capteur 9 de mesure de la largeur, capteur qui est du type sans contact, par exemple un capteur utilisant un faisceau laser. La boucle de correction 13 comporte un régulateur 11 qui compare la valeur mesurée de la largeur « l » à une valeur de consigne « l consigne » stockée dans une mémoire 12 et, lorsque la valeur mesurée est différente de la valeur de consigne, le régulateur 11 applique une valeur corrigée du coefficient de proportionnalité K svis à la commande de pilotage 14 de la vitesse de la vis.

Dans une variante de l'invention, on utilise un capteur de pression (non représenté sur le dessin) qui est placé dans la voûte en amont de la buse d'extrusion 5 relié à une boucle de correction de la vitesse de la vis de manière à garder la pression mesurée dans la voûte égale à une valeur de consigne préétablie. Ainsi, pour un mélange d'élastomère donné, on arrive à attribuer, par apprentissage et détermination expérimentale, à une pression préétablie dans la voûte, une certaine largeur du produit profilé P. Les valeurs de consigne de la pression et de la largeur sont stockées dans une table de correspondance qui est utilisée par un régulateur pour corriger la valeur de la vitesse de la vis en fonction de la valeur mesurée de la pression en appliquant un coefficient de proportionnalité corrigé à la commande de pilotage de la vitesse de la vis, comme précédemment décrit. Ceci trouve son application lors de l'utilisation de l'appareil d'extrusion avec des mélanges d'élastomère dont la fluidité est sensiblement constante dans le temps et permet de s'affranchir de l'utilisation d'un capteur de mesure de la largeur du produit profilé P.

Selon l'invention, le deuxième rouleau 7 comporte ses propres moyens d'entraînement en rotation, par exemple un moteur électrique, reliés à des deuxièmes moyens de commande de la vitesse de rotation du deuxième rouleau 7 de manière à ce qu'il puisse tourner à une vitesse Ω r2 différente de la vitesse de rotation Ω r1 du premier rouleau 6. De manière avantageuse, les deuxièmes moyens de commande sont connectés auxdits deuxièmes moyens d'entraînement en rotation pour régler la vitesse de rotation Ω r2 du deuxième rouleau 7 en fonction de l'épaisseur mesurée « e » de la bande de produit profilé P. Ainsi, moyennant un entraînement indépendant de chaque rouleau, notamment en installant une motorisation indépendante sur chaque rouleau, on peut régler la vitesse du deuxième rouleau 7, tout en gardant constante la vitesse du premier rouleau 6. Il a été constaté de manière surprenante lors des tests effectués en laboratoire que, lorsque le deuxième rouleau 7 tourne plus vite que le premier rouleau 6, le débit de mélange dans l'entrefer des rouleaux augmente, et, par conséquent, l'épaisseur de la bande de produit profilé P augmente. Ceci permet de poser le produit profilé P à la bonne vitesse sur le tambour d'assemblage 20, tout en pouvant varier son épaisseur.

Plusieurs moyens de régulation de la vitesse du deuxième rouleau 7 en fonction de l'épaisseur mesurée « e » du produit P peuvent être envisagés. La figure 1, illustre un exemple de tels moyens de régulation dans lequel lesdits deuxièmes moyens de commande sont représentés par une boucle de régulation 14 comprenant un capteur 8 de mesure de l'épaisseur « e » de la bande de produit profilé P, des moyens de comparaison 15 de la valeur mesurée de l'épaisseur « e » à une valeur de consigne de l'épaisseur « e consigne » stockée dans une mémoire 16, ainsi que des moyens de pilotage 17 de la vitesse du deuxième rouleau 7. Le capteur de mesure de l'épaisseur 8 est du type sans contact, par exemple un capteur utilisant un faisceau laser.

Lors des tests effectués, il a été établi que la vitesse de rotation Ω r2 du deuxième rouleau 7 est directement reliée à la vitesse de rotation Ω r1 du premier rouleau 6 par un coefficient de proportionnalité K sr, tel que Ω r2 = K sr * Ω r1, le coefficient de proportionnalité Ksr étant déterminé par voie expérimentale pour un mélange d'élastomère prédéterminé et un appareil d'extrusion donné de manière à adapter la vitesse du deuxième rouleau 7 à celle du premier rouleau 6 pour obtenir un profilé P d'épaisseur constante. En vue de ceci, le deuxième rouleau 7 est muni d'un codeur optique, et les vitesses Ω r2 et Ωr1 sont synchronisées moyennant une commande d'axe. Ainsi, un moyen de mesure détermine à chaque instant la vitesse de rotation Ωr1 du premier rouleau 6 et transmet cette valeur à la commande de pilotage 17 de la vitesse du deuxième rouleau Ωr2 de sorte que, à tout instant, la vitesse de rotation du deuxième rouleau Ωr2 soit égale au produit de la vitesse de rotation du premier rouleau Ωr1 par un coefficient de proportionnalité Ksr prédéterminé.

Ainsi, la largeur « l » de la bande de produit P est contrôlée par le différentiel de vitesses de rotation entre le premier rouleau 6 et la vis 2 et l'épaisseur « e » de celle-ci est contrôlée par le différentiel de vitesses entre le premier rouleau 6 et le deuxième rouleau 7. Ceci permet de varier la largeur et l'épaisseur de la bande de produit profilé P tout en gardant constante la vitesse de rotation du premier rouleau qui est celle de pose du produit sur un dispositif aval.

De surcroît, l'augmentation de l'épaisseur de la bande de produit profilé P pour arriver à l'épaisseur de consigne « e consigne » peut s'accompagner d'une baisse de la pression dans la voûte avant la buse d'extrusion 5. Cette baisse de pression fait que la largeur mesurée « l » diminue, elle est vue par le capteur 9 de mesure de la largeur et prise en compte par la boucle de correction 13 qui corrige la vitesse de rotation de la vis 2 afin de rétablir la valeur de la largeur à celle de consigne « l consigne ». On obtient ainsi une régulation automatique des valeurs de l'épaisseur et de la largeur, tout en gardant constante la vitesse de pose.

D'autres variantes et modes de réalisation de l'invention peuvent être envisagées sans sortir du cadre de ses revendications. Ainsi, la vitesse de rotation du deuxième rouleau peut être ajustée manuellement en fonction des données fournies par le capteur de mesure de l'épaisseur.

## Revendications

1. Appareil d'extrusion destiné à la fabrication d'une bande continue de produit profilé (P) comprenant une vis (2) animée en rotation dans un corps (1) fixe comportant une entrée d'alimentation (3) en mélange d'élastomère et une sortie (4) munie d'une buse d'extrusion (5) qui débite dans l'entrefer formé entre un premier rouleau (6) et un deuxième rouleau (7) qui sont rotatifs et sont amenés à tourner dans des sens contraires, l'appareil comportant des premiers moyens d'entraînement en rotation du premier rouleau (6) et des premiers moyens de commande aptes à synchroniser la vitesse de rotation (Ω r1) du premier rouleau (6) et la vitesse de rotation (Ω vis) de la vis (2), et des deuxièmes moyens d'entraînement en rotation du deuxième rouleau (7) aptes à l'entraîner à une vitesse de rotation (Ω r2) différente de la vitesse de rotation du premier rouleau (Ω r1), **caractérisé en ce que** lesdits premiers moyens de commande sont connectés aux moyens d'entraînement de la vis pour régler la vitesse de rotation de la vis (2) en fonction de la largeur de la bande de produit profilé (P) et **en ce qu'**il comprend des deuxièmes moyens de commande connectés auxdits deuxièmes moyens d'entraînement en rotation pour régler la vitesse de rotation (Ω r2) du deuxième rouleau (7) en fonction de l'épaisseur de ladite bande.

2. Appareil d'extrusion selon la revendication 1, **caractérisé en ce que** la vitesse de rotation du deuxième rouleau (7) est variable indépendamment de la vitesse de rotation du premier rouleau (6).

3. Appareil d'extrusion selon l'une des revendications 1 ou 2, **caractérisé en ce que** lesdits deuxièmes moyens de commande comprennent un capteur (8) de mesure de l'épaisseur de la bande de produit profilé (P) et des moyens de comparaison de la valeur mesurée de l'épaisseur (e) à une valeur de consigne de l'épaisseur (e consigne) et que la vitesse de rotation (Ω r2) du deuxième rouleau (7) est commandée en fonction du résultat de la comparaison.

4. Appareil d'extrusion selon la revendication 3, **caractérisé en ce que** la vitesse de rotation (Ω r2) du deuxième rouleau (7) est directement reliée à la vitesse de rotation (Ω r1) du premier rouleau (6) par un coefficient de proportionnalité K sr (Ω r2 = K sr * Ω r1).

5. Appareil d'extrusion selon l'une des revendications précédentes, **caractérisé en ce qu'**il comprend un capteur (9) de mesure de la largeur de la bande de produit profilé (P) et des moyens de comparaison de la valeur mesurée de la largeur (l) à une valeur de consigne de la largeur (l consigne) et que la vitesse de rotation (Ω vis) de la vis (2) est commandée en fonction du résultat de la comparaison.

6. Appareil d'extrusion selon la revendication 5, **caractérisé en ce que** la vitesse de rotation de la vis est directement liée à la vitesse de rotation (Ω r1) du premier rouleau (6) par un coefficient de proportionnalité K svis (Ω vis = K svis * Ω r1).

7. Procédé d'extrusion destiné à la fabrication d'une bande continue de produit profilé à l'aide d'un appareil d'extrusion comprenant une vis (2) animée en rotation dans un corps (1) fixe comportant une entrée d'alimentation (3) en mélange d'élastomère et une sortie (4) munie d'une buse d'extrusion (5) qui débite dans l'entrefer formé entre un premier rouleau (6) et un deuxième rouleau (7) qui sont rotatifs et sont amenés à tourner dans des sens contraires, l'appareil comportant des premiers moyens d'entraînement en rotation du premier rouleau (6) et des premiers moyens de commande, lesdits premiers moyens de commande étant aptes à synchroniser la vitesse de rotation (Ω r1) du premier rouleau (6) avec la vitesse de rotation (Ω vis) de la vis (2), et des deuxièmes moyens d'entraînement en rotation du deuxième rouleau reliés à des deuxièmes moyens de commande, dans lequel on entraîne le deuxième rouleau en rotation à une vitesse de rotation (Ω r2) différente de la vitesse de rotation du premier rouleau (Ω r1), et dans lequel on règle la vitesse de rotation de la vis (2) en fonction de la largeur de la bande de produit profilé (P) et on règle la vitesse de rotation (Ω r2) du deuxième rouleau (7) en fonction de l'épaisseur de ladite bande.

8. Procédé selon la revendication 7, **caractérisé en ce que** lesdits deuxièmes moyens de commande comprennent un capteur de mesure de l'épaisseur de la bande de produit profilé (P) et des moyens de comparaison de la valeur mesurée de l'épaisseur (e) à une valeur de consigne de l'épaisseur (e consigne) et que la vitesse de rotation (Ω r2) du deuxième rouleau (7) est commandée en fonction du résultat de la comparaison.

9. Procédé selon l'une des revendications 7 ou 8, **caractérisé en ce que** ledit appareil comprend un capteur de mesure de la largeur de la bande de produit profilé (P) et des moyens de comparaison de la valeur mesurée de la largeur (l) à une valeur de consigne de la largeur (l consigne) et que la vitesse de rotation (Ω vis) de la vis (2) est commandée en fonction du résultat de la comparaison.

10. Procédé selon l'une des revendications 7 à 9, **caractérisé en ce que** ledit premier rouleau (6) est mis en appui sur la surface de réception d'un moyen de pose de bande de produit profilé (P) pour servir de rouleau d'application de celle-ci.

11. Procédé selon la revendication 10, **caractérisé en ce que** ledit moyen de pose est un tambour d'assemblage (20) et **en ce que** la vitesse circonférentielle du premier rouleau est égale à la vitesse circonférentielle de la surface de réception dudit tambour d'assemblage (20).

## Patentansprüche

1. Extrusionsvorrichtung, welche zur Herstellung eines kontinuierlichen Bands eines mit einem Profil versehenen Produkts (P) bestimmt ist, umfassend eine Schnecke (2), die in einem festen Körper (1) drehbar bewegt wird, umfassend einen Zufuhreinlass (3) für eine Elastomermischung und einen Ausgang (4), der mit einer Extrusionsdüse (5) versehen ist, die in einen Spalt führt, der zwischen einer ersten Walze (6) und einer zweiten Walze (7) gebildet ist, die drehbar sind und in entgegengesetzten Richtungen in Drehung versetzt werden, wobei die Vorrichtung umfasst: erste Mittel zum Mitführen der ersten Walze (6) in Drehung, und erste Steuermittel, die geeignet sind, die Drehgeschwindigkeit (Ωr1) der ersten Walze (6) und die Drehgeschwindigkeit (Ωvis) der Schnecke (2) zu synchronisieren, und zweite Mittel zum Mitführen der zweiten Walze (7) in Drehung, die geeignet sind, diese mit einer Drehgeschwindigkeit (Ωr2) mitzuführen, die von der Drehgeschwindigkeit (Ωr1) der ersten Walze verschieden ist,
**dadurch gekennzeichnet, dass** die ersten Steuermittel mit Mitteln zum Mitführen der Schnecke verbunden sind, um die Drehgeschwindigkeit der Schnecke (2) als Funktion der Breite des Bands des mit einem Profil versehenen Produkts (P) zu regeln, und dadurch, dass diese zweite Steuermittel umfasst, die mit den zweiten Mitteln zum Mitführen in Drehung verbunden sind, um die Drehgeschwindigkeit (Ωr2) der zweiten Walze (7) als Funktion der Dicke des Bands zu regeln.

2. Extrusionsvorrichtung nach Anspruch 1,
**dadurch gekennzeichnet, dass** die Drehgeschwindigkeit der zweiten Walze (7) unabhängig von der Drehgeschwindigkeit der ersten Walze (6) variabel ist.

3. Extrusionsvorrichtung nach einem der Ansprüche 1 oder 2,
**dadurch gekennzeichnet, dass** die zweiten Steuermittel einen Sensor (8) zur Messung der Dicke des Bands des mit einem Profil versehenen Produkts (P) und Mittel zum Vergleichen des gemessenen Werts der Dicke (e) mit einem Sollwert der Dicke (e Soll) umfassen, und dass die Drehgeschwindigkeit (Ωr2) der zweiten Walze (7) als Funktion des Ergebnisses des Vergleichs gesteuert wird.

4. Extrusionsvorrichtung nach Anspruch 3,
**dadurch gekennzeichnet, dass** die Drehgeschwindigkeit (Ωr2) der zweiten Walze (7) direkt mit der Drehgeschwindigkeit (Ωr1) der ersten Walze (6) durch einen Proportionalitätskoeffizienten K sr verbunden ist (Ωr2 = K sr * Ωr1).

5. Extrusionsvorrichtung nach einem der vorhergehenden Ansprüche,
**dadurch gekennzeichnet, dass** diese einen Sensor (9) zur Messung der Breite des Bands des mit einem Profil versehenen Produkts (P) und Mittel zum Vergleichen des gemessenen Werts der Breite (l) mit einem Sollwert der Breite (l Soll) umfasst, und dass die Drehgeschwindigkeit (Ωvis) der Schnecke (2) als Funktion des Ergebnisses des Vergleichs gesteuert wird.

6. Extrusionsvorrichtung nach Anspruch 5,
**dadurch gekennzeichnet, dass** die Drehgeschwindigkeit der Schnecke direkt mit der Drehgeschwindigkeit (Ωr1) der ersten Walze (6) durch einen Proportionalitätskoeffizienten K svis verbunden ist (Ωvis = K svis * Ωr1).

7. Verfahren zur Extrusion, welches zur Herstellung eines kontinuierlichen Bands eines mit einem Profil versehenen Produkts mit Hilfe einer Extrusionsvorrichtung bestimmt ist, umfassend eine Schnecke (2), die in einem festen Körper (1) drehbar bewegt wird, umfassend einen Zufuhreinlass (3) für eine Elastomermischung und einen Ausgang (4), der mit einer Extrusionsdüse (5) versehen ist, die in einen Spalt führt, der zwischen einer ersten Walze (6) und einer zweiten Walze (7) gebildet ist, die drehbar sind und in entgegengesetzten Richtungen in Drehung versetzt werden, wobei die Vorrichtung umfasst: erste Mittel zum Mitführen der ersten Walze (6) in Drehung, und erste Steuermittel, wobei die ersten Steuermittel geeignet sind, die Drehgeschwindigkeit (Ωr1) der ersten Walze (6) mit der Drehgeschwindigkeit (Ωvis) der Schnecke (2) zu synchronisieren, und zweite Mittel zum Mitführen der zweiten Walze in Drehung, die mit den zweiten Steuermitteln verbunden sind, wobei die zweite Walze mit einer Drehgeschwindigkeit (Ωr2) in Drehung mitgeführt wird, die von der Drehgeschwindigkeit (Ωr1) der ersten Walze verschieden ist, und wobei die Drehgeschwindigkeit der Schnecke (2) als Funktion der Breite des Bands des mit einem Profil versehenen Produkts (P) geregelt wird, und wobei die Drehgeschwindigkeit (Ωr2) der zweiten Walze (7) als Funktion der Dicke des Bands geregelt wird.

8. Verfahren nach Anspruch 7,
**dadurch gekennzeichnet, dass** die zweiten Steuermittel einen Sensor zur Messung der Dicke des Bands des mit einem Profil versehenen Produkts (P) und Mittel zum Vergleichen des gemessenen Werts der Dicke (e) mit einem Sollwert der Dicke (e Soll) umfassen, und dass die Drehgeschwindigkeit (Ωr2) der zweiten Walze (7) als Funktion des Ergebnisses des Vergleichs gesteuert wird.

9. Verfahren nach einem der Ansprüche 7 oder 8,
**dadurch gekennzeichnet, dass** die Vorrichtung einen Sensor zur Messung der Breite des Bands des mit einem Profil versehenen Produkts (P) und Mittel zum Vergleichen des gemessenen Werts der Breite (l) mit einem Sollwert der Breite (l Soll) umfasst, und dass die Drehgeschwindigkeit (Ωvis) der Schnecke (2) als Funktion des Ergebnisses des Vergleichs gesteuert wird.

10. Verfahren nach einem der Ansprüche 7 bis 9,
**dadurch gekennzeichnet, dass** die erste Walze (6) in Anlage an die Aufnahmefläche eines Mittels zur Positionierung des Bands des mit einem Profil versehenen Produkts (P) gebracht wird, um als Walze zum Aufbringen desselben zu dienen.

11. Verfahren nach Anspruch 10,
**dadurch gekennzeichnet, dass** das Mittel zur Positionierung eine Montagetrommel (20) ist, und dadurch, dass die Umfangsgeschwindigkeit der ersten Walze gleich ist der Umfangsgeschwindigkeit der Aufnahmefläche der Montagetrommel (20).

## Claims

1. Extrusion apparatus intended for manufacturing a continuous strip of profiled product (P), comprising a screw (2) that is set in rotation in a fixed barrel (1) having a feed inlet (3) for elastomer mixture and an outlet (4) provided with an extrusion nozzle (5) which discharges into the nip formed between a first rotary roll (6) and a second rotary roll (7) that are made to rotate in opposite directions, the apparatus having first means for rotating the first roll (6) and first control means that are able to synchronize the speed of rotation (Ω r1) of the first roll (6) and the speed of rotation (Ω vis) of the screw (2), and second means for rotating the second roll (7) that are able to rotate the latter at a speed of rotation (Ω r2) that is different from the speed of rotation of the first roll (Ω r1), **characterized in that** said first control means are connected to the means for driving the screw in order to regulate the speed of rotation of the screw (2) depending on the width of the strip of profiled product (P), and **in that** it comprises second control means connected to said second means for rotating in order to regulate the speed of rotation (Ω r2) of the second roll (7) depending on the thickness of said strip.

2. Extrusion apparatus according to Claim 1, **characterized in that** the speed of rotation of the second roll (7) is variable independently of the speed of rotation of the first roll (6).

3. Extrusion apparatus according to either of Claims 1 and 2, **characterized in that** said second control means comprise a sensor (8) for measuring the thickness of the strip of profiled product (P) and means for comparing the measured value of the thickness (e) with a setpoint value of the thickness (e setpoint), and **in that** the speed of rotation (Ω r2) of the second roll (7) is controlled depending on the result of the comparison.

4. Extrusion apparatus according to Claim 3, **characterized in that** the speed of rotation (Ω r2) of the second roll (7) is directly linked to the speed of rotation (Ω r1) of the first roll (6) by a coefficient of proportionality K sr (Ω r2 = K sr * Ω r1).

5. Extrusion apparatus according to one of the preceding claims, **characterized in that** it comprises a sensor (9) for measuring the width of the strip of profiled product (P) and means for comparing the measured value of the width (l) with a setpoint value of the width (l setpoint), and **in that** the speed of rotation (Ω vis) of the screw (2) is controlled depending on the result of the comparison.

6. Extrusion apparatus according to Claim 5, **characterized in that** the speed of rotation of the screw is directly linked to the speed of rotation (Ω r1) of the first roll (6) by a coefficient of proportionality K svis (Ω vis = K svis * Ω r1).

7. Extrusion method intended for manufacturing a continuous strip of profiled product with the aid of an extrusion apparatus comprising a screw (2) that is set in rotation in a fixed barrel (1) having a feed inlet (3) for elastomer mixture and an outlet (4) provided with an extrusion nozzle (5) which discharges into the nip formed between a first rotary roll (6) and a second rotary roll (7) that are made to rotate in opposite directions, the apparatus having first means for rotating the first roll (6) and first control means, said first control means being able to synchronize the speed of rotation (Ω r1) of the first roll (6) with the speed of rotation (Ω vis) of the screw (2), and second means for rotating the second roll, said second means being connected to second control means, wherein the second roll is rotated at a speed of rotation (Ω r2) that is different from the speed of rotation of the first roll (Ω r1), and wherein the speed of rotation of the screw (2) is regulated depending on the width of the strip of profiled product (P) and the speed of rotation (Ω r2) of the second roll (7) is regulated depending on the thickness of said strip.

8. Method according to Claim 7, **characterized in that** said second control means comprise a sensor for measuring the thickness of the strip of profiled product (P) and means for comparing the measured value of the thickness (e) with a setpoint value of the thickness (e setpoint), and **in that** the speed of rotation (Ω r2) of the second roll (7) is controlled depending on the result of the comparison.

9. Method according to either of Claims 7 and 8, **characterized in that** said apparatus comprises a sensor for measuring the width of the strip of profiled product (P) and means for comparing the measured value of the width (l) with a setpoint value of the width (l setpoint), and **in that** the speed of rotation (Ω vis) of the screw (2) is controlled depending on the result of the comparison.

10. Method according to one of Claims 7 to 9, **characterized in that** said first roll (6) is made to bear against the receiving surface of a profiled-product (P) strip-laying means in order to serve as a roll for applying said strip.

11. Method according to Claim 10, **characterized in that** said laying means is a tyre-building drum (20), and **in that** the circumferential speed of the first roll is equal to the circumferential speed of the receiving surface of said tyre-building drum (20).
